# DEMANDE DE BREVET EUROPEEN

(11) **EP 3 712 463 A1**
(43) Date de publication de la demande: **23.09.2020**
(21) Numéro de dépôt: 20164091.9
(22) Date de dépôt: 19.03.2020
(51) Int. Cl.: F16F 15/139

(54) **DISPOSITIF AMORTISSEUR**

(30) Priorité: 21.03.2019 FR 1902949
(71) Demandeur: VALEO EMBRAYAGES, 80009 Amiens (FR)
(72) Inventeur: FENIOUX, Daniel, 95892 CERGY PONTOISE (FR)
(74) Mandataire: Vincent, Catherine Marie Marguerite

(57) **Abrégé**

L'invention concerne un dispositif amortisseur (1) comprenant une masse primaire (2),une masse secondaire (3), et un accumulateur d'énergie disposé entre les masses, un premier élément de frottement (5) lié à la masse primaire et un second élément de frottement (6) tournant par rapport au premier élément de frottement et en appui contre la masse primaire, et un organe de verrouillage (10) lié à la masse secondaire, mobile sous l'action d'une force centrifuge et solidaire du second élément de frottement au-dessous d'une valeur de vitesse de rotation déterminée, l'organe de verrouillage forme un ressort à lame (13) configuré pour qu'une extrémité libre (24) du ressort à lame soit positionnée au repos en appui circonférentiellement contre une butée (14) formée par le second élément de frottement et est apte à être écartée de la butée sous l'action de la force centrifuge.

## Description

L'invention concerne un dispositif amortisseur, notamment pour un véhicule automobile.

Il est connu des dispositifs amortisseurs, tels que décrits dans la demande de brevet FR 2 553 848, comprenant une masse d'inertie primaire et une masse d'inertie secondaire. La masse d'inertie primaire est apte à être reliée à un moteur à combustion interne. La masse d'inertie secondaire est apte à être reliée à une pièce d'entrée d'une boîte de vitesses. La masse d'inertie primaire et la masse d'inertie secondaire sont aptes à tourner l'une par rapport à l'autre de façon limitée. L'amortissement prévu entre les deux masses d'inertie en rotation l'une par rapport à l'autre est formé par des accumulateurs d'énergie disposés entre la masse d'inertie primaire et la masse d'inertie secondaire, tels que des ressorts de compression à boudins. Des butées rigides sont prévues entre les deux masses d'inertie pour éviter une compression trop importante des accumulateurs d'énergie lors des grandes amplitudes d'oscillation des deux masses d'inertie par suite d'excitations apparaissant entre les deux masses d'inertie.

Pour atténuer ou empêcher des à-coups, c'est-à-dire atténuer ou empêcher l'impact des butées, l'amortissement est également formé par une friction agissant en parallèle avec les accumulateurs d'énergie.

Une friction, telle que décrite dans la demande de brevet FR 2 553 848, est formée par trois premiers anneaux de friction aptes à être reliés en rotation à la masse d'inertie primaire et trois deuxièmes anneaux de friction liés en rotation à la masse d'inertie secondaire. Un troisième anneau de friction est placé entre l'un des premiers anneaux de friction et la masse d'inertie secondaire. Un anneau élastique est placé entre la masse d'inertie primaire et un autres des premiers anneaux de friction de telle sorte à exercer un effort axial des divers anneaux de friction les uns contre les autres et un effort axial du troisième anneau de friction contre la masse d'inertie primaire. Les premiers anneaux de friction sont aptes à être liés en rotation à un organe de verrouillage qui est formé par un ressort à lame fixé en rotation sur la masse d'inertie primaire et par une denture conjuguée montée à une extrémité libre du ressort à lame. Cette denture conjuguée est apte à venir s'engrener avec une denture complémentaire formée sur chacun des premiers anneaux de friction. Cet engrenage permet de maintenir la liaison en rotation des premiers anneaux de friction avec la masse d'inertie primaire.

L'engrenage est maintenu tant que la vitesse de rotation du moteur est en dessous d'une vitesse seuil. En dessous de cette valeur seuil, et lorsque le moteur est en marche, la masse d'inertie primaire et la masse d'inertie secondaire tournent l'une par rapport à l'autre avec une certaine résistance résultant du frottement des divers anneaux de friction les uns par rapport aux autres et résultant du frottement du troisième anneau de friction contre la masse d'inertie secondaire. Au-delà de la vitesse seuil, la lame ressort a tendance à se soulever par rapport aux premiers anneaux de friction. Le débattement entre la masse d'inertie primaire et la masse d'inertie secondaire sans frottement est alors rendu possible. En effet, la liaison entre les premiers anneaux de friction et la masse d'inertie primaire n'existe plus. Le frottement du troisième anneau de friction et de la masse secondaire n'est donc plus généré.

Cette friction permet donc de générer de l'hystérésis nécessaire pour créer de la résistance entre les deux masses d'inertie qui diminue lorsque la vitesse de rotation augmente. Cette disposition assure que la résistance à la rotation est relativement élevée aux faible débattements angulaires et croit avec la rotation relative des masses d'inertie, de sorte que l'apparition d'oscillations entre les deux masses d'inertie est supprimée quand la vitesse de rotation augmente.

Ainsi on comprend qu'une telle friction est nécessaire pour démarrer le moteur. Mais cette friction peut être gênante pour le fonctionnement si le niveau de frottement nécessaire au démarrage est élevé. De plus, une telle friction ne doit pas être trop encombrante, ni trop lourde au risque de rendre sa mise en fonctionnement compliquée.

Or, la présence de cette denture conjuguée et la présence d'un nombre important d'anneaux de friction augmentent le poids d'un tel dispositif. De plus avec un tel engrenage, il n'est pas garanti un rétablissement de la liaison solidaire de manière fiable et reproductible.

La présente invention vise à éviter ces inconvénients et à réaliser un dispositif amortisseur pour l'absorption ou la compensation d'à-coups de rotation, ledit dispositif comprenant une masse d'inertie primaire,
une masse d'inertie secondaire, et
un accumulateur d'énergie disposé entre la masse d'inertie primaire et la masse d'inertie secondaire, la masse d'inertie primaire et la masse d'inertie secondaire étant aptes à réaliser une rotation relative contre l'action de l'accumulateur d'énergie,
au moins un premier élément de frottement solidaire en rotation de la masse d'inertie primaire et au moins un second élément de frottement tournant par rapport au premier élément de frottement et en appui contre la masse d'inertie primaire, ces éléments étant reliés entre eux par friction, et
un organe de verrouillage solidaire en rotation de la masse d'inertie secondaire, mobile sous l'action d'une force centrifuge et solidaire du second élément de frottement quand une vitesse de rotation du moteur est en-dessous d'une valeur pré-déterminée,
l'organe de verrouillage forme au moins un ressort à lame, le ressort à lame étant configuré de telle manière à ce qu'une extrémité libre du ressort à lame soit positionnée au repos en appui circonférentiellement contre une butée formée par le second élément de frottement et est apte à être écartée de la butée sous l'action de la force centrifuge libérant le second élément de frottement.

Ainsi, le retour en position de repos s'effectue de manière fiable et reproductible. De plus, un tel dispositif est très peu endommageant.

Dans un exemple de réalisation de l'invention, la masse d'inertie primaire est apte à être reliée à un moteur à combustion interne et la masse d'inertie secondaire est apte à être reliée à une pièce d'entrée d'une boîte de vitesses.

Dans un exemple de réalisation de l'invention, l'un des accumulateurs d'énergie est un organe élastique du type à boudin ou du type ressort à lame.

Dans un exemple de réalisation de l'invention, le second élément de frottement forme un anneau présentant une dimension radiale variable lorsque l'on se déplace circonférentiellement, l'anneau s'étendant entre un contour intérieur sensiblement circulaire et un contour extérieur de position radiale variable, une partie de ce contour extérieur formant la butée.

Dans un exemple de réalisation de l'invention, l'extrémité libre présente une forme sensiblement plane apte à venir épouser une forme similaire en correspondance formée par le contour extérieur de l'anneau.

Dans un exemple de réalisation de l'invention, la butée forme une première surface s'étendant radialement à partir d'un cercle d'un premier rayon jusqu'à un sommet d'un deuxième rayon plus grand, la première surface se prolongeant en son sommet par une deuxième surface s'étendant circonférentiellement, la deuxième surface se prolongeant par une troisième surface s'étendant selon une pente jusqu'au cercle de premier rayon, l'extrémité libre du ressort à lame venant se positionner au regard de la troisième surface.

Dans un exemple de réalisation de l'invention, le deuxième élément de frottement présente une pluralité de butées.

Dans un exemple de réalisation de l'invention, l'organe de verrouillage comporte une pluralité de ressorts à lame, le nombre de ressorts à lame étant égal à la moitié du nombre de butées. Dans un exemple de réalisation de l'invention, l'organe de verrouillage comporte une série d'un premier ressort à lame et d'un deuxième ressort à lame disposé l'un à la suite de l'autre, les extrémités libres de chacun des deux ressorts à lame étant disposées tête bêche ou l'une à la suite de l'autre.

Dans un exemple de réalisation de l'invention, l'organe de verrouillage forme une première portion annulaire solidaire en rotation de la masse secondaire et une deuxième portion comprenant une partie fixe et une partie mobile, l'extrémité libre du ressort à lame étant formée par la partie mobile tout en s'étendant au repos à l'intérieur d'une surface cylindrique formée par la partie fixe.

Dans un exemple de réalisation de l'invention, la première portion et la deuxième portion s'étendent sensiblement perpendiculairement l'une par rapport à l'autre. Notamment, le deuxième élément de frottement peut présenter une forme en L inversée en coupe transversale. Dans un exemple de réalisation de l'invention, l'extrémité libre du ressort à lame est apte à être déplacée radialement vers l'extérieur jusqu'à être plaquée contre la masse secondaire.

Dans un exemple de réalisation de l'invention, l'extrémité libre du ressort à lame est configurée de telle sorte à s'écarter de la butée du second élément de frottement sur une plage de valeurs de tours par minute pré-déterminée.

Dans un exemple préféré, l'extrémité libre du ressort à lame est configurée de telle sorte à s'écarter de la butée du second élément de frottement pour une vitesse de rotation comprise entre 400 et 600 tour/min. Il peut en effet être prévu que la butée soit configurée de telle manière à ce que l'extrémité libre de la languette ne soit plus au contact de la butée au-delà d'un nombre de tours par minute pré-déterminé. Dans un exemple préféré, l'extrémité libre n'est plus au contact de la butée au-delà de 600 tours par minutes.

Dans un exemple réalisation de l'invention, une rondelle élastique est placée entre la masse d'inertie primaire et le premier élément de frottement pour exercer un effort axial du deuxième élément de frottement contre la masse d'inertie primaire.

L'invention a également pour objet un procédé de fabrication d'un organe de verrouillage d'un dispositif amortisseur tel que précédemment décrit, caractérisé en ce qu'il comporte les étapes suivantes :
découper une tôle,
plier la tôle sur tout son pourtour périphérique de manière à obtenir une première portion et une deuxième portion comprenant le ressort à lame, puis
plier le ressort à lame de telle sorte à ce que son extrémité libre se situe à l'intérieur d'un cylindre délimité par le reste de la deuxième portion.

L'invention pourra être mieux comprise à la lecture de la description qui va suivre, d'exemples non limitatifs de mise en œuvre de celle-ci et à l'examen des dessins annexés sur lesquels :
[Fig. 1] représente une vue en perspective partielle d'un dispositif amortisseur, selon un premier mode de réalisation de l'invention ;
[Fig.2] représente une vue en perspective partielle d'une partie de la vue selon la [Fig. 1],
[Fig.3] représente une vue en perspective partielle d'une partie de la vue selon la [Fig. 1], selon un autre angle de vue,
[Fig.4] représente une vue en perspective d'un organe de verrouillage, selon le premier mode de réalisation de l'invention;
[Fig.5] représente une vue en perspective d'une deuxième rondelle de frottement, selon le premier mode de réalisation de l'invention;
[Fig.6] représente un organe de verrouillage et une deuxième rondelle de frottement, selon un deuxième exemple de réalisation de l'invention;
[Fig.7] représente une vue en perspective partielle d'un organe de verrouillage vue d'une première face, selon le premier mode de réalisation de l'invention;
[Fig.8] représente une vue en perspective partielle d'un organe de verrouillage vue d'une deuxième face opposée à une première face, selon le premier mode de réalisation de l'invention;
[Fig.9] représente une vue d'une tôle découpée pour obtenir un organe de verrouillage, selon le premier mode de réalisation de l'invention ;
[Fig. 10] représente une vue en coupe partielle en perspective d'un ensemble volant secondaire, organe de verrouillage et deuxième rondelle de frottement, selon le premier mode de réalisation de l'invention, et
[Fig. 11] représente un graphique illustrant une position d'une extrémité libre d'un ressort à lame du dispositif amortisseur en fonction de la vitesse de rotation du moteur, selon un premier mode de réalisation de l'invention.

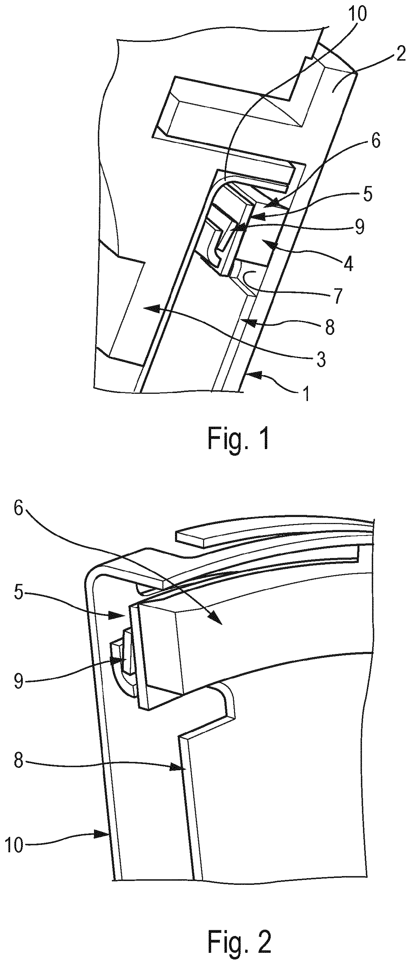

Les figures 1 à 3 illustrent un dispositif amortisseur 1 selon un premier mode de réalisation de l'invention. Le dispositif amortisseur 1 comprend une masse d'inertie primaire ou volant primaire 2 et une masse d'inertie secondaire ou volant secondaire 3. Un accumulateur d'énergie (non représenté) est disposé entre le volant primaire 2 et le volant secondaire 3. Par exemple, il pourrait être prévu des ressorts du type ressorts à boudins ou du type ressorts à lame.

Un dispositif d'hystérésis 4 est disposé entre le volant primaire 2 et le volant secondaire 3. Ce dispositif d'hystérésis 4 comprend une première rondelle de frottement 5 disposée fixe en rotation par rapport au volant primaire 2 et une deuxième rondelle de frottement 6 positionnée entre la première rondelle de frottement 5 et une face 7 du volant primaire 2. Un support 8 est monté fixe en rotation par rapport au volant primaire 2. Ce support 8 comprend des moyens de liaison en rotation de la première rondelle de frottement 5.

La première rondelle de frottement 5 et la deuxième rondelle de frottement 6 sont placées en appui contre la face 7 du volant primaire 2 au moyen d'une rondelle élastique 9 montée entre le support 8 et la première rondelle de frottement 5 de manière à exercer un appui axial contre la première rondelle de frottement 5 et contre la deuxième rondelle de frottement 6.

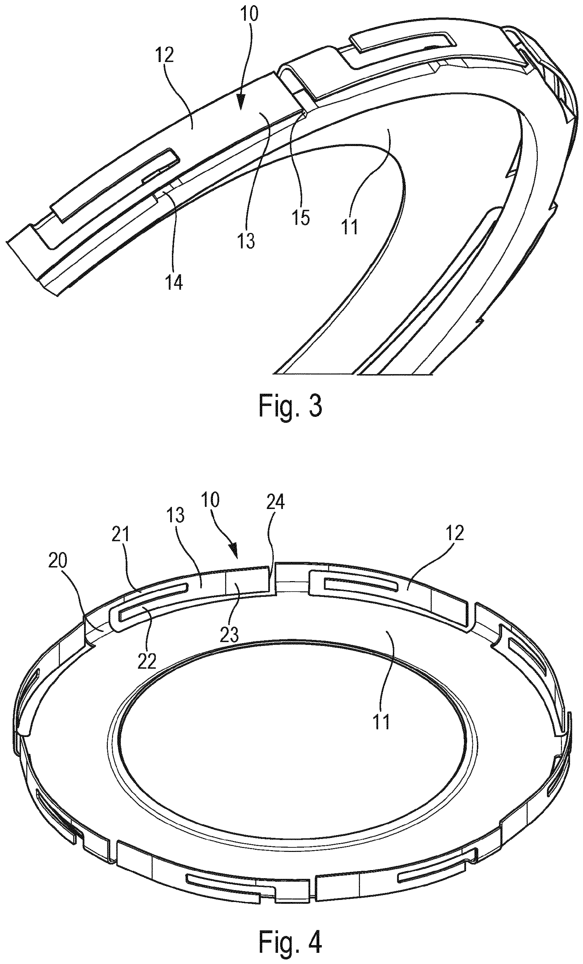

Un organe de verrouillage 10 est également prévu et positionné monté fixe en rotation sur le volant secondaire 3. L'organe de verrouillage 10 forme une première portion 11 montée fixée sur le volant secondaire 3 et une deuxième portion 12 comprenant une pluralité de ressorts à lame tels que 13. Dans l'exemple figure 4, huit ressorts à lame sont formés. Un tel organe de verrouillage 10 pourraient comporter un seul ressort à lame ou plus de huit ressorts à lame.

La première portion 11 présente une forme annulaire plate montée fixe en rotation sur le volant secondaire 3. La deuxième portion 12 forme une zone de raideur 21 et une languette 23. Une portion de liaison 20 relie la première portion 11 à la deuxième portion 12. La zone de raideur 21 est configurée pour donner une certaine élasticité de mouvement à la languette 23. Pour configurer cette raideur, une masse additionnelle 22 peut être ajoutée. Dans l'exemple tel que décrit en figure 4, la masse additionnelle 22 et la zone de raideur 21 sont situées parallèlement l'une à côté de l'autre. Dans l'exemple de l'invention, la masse additionnelle 22 est formée par de la matière s'étendant à partir de la languette 23.

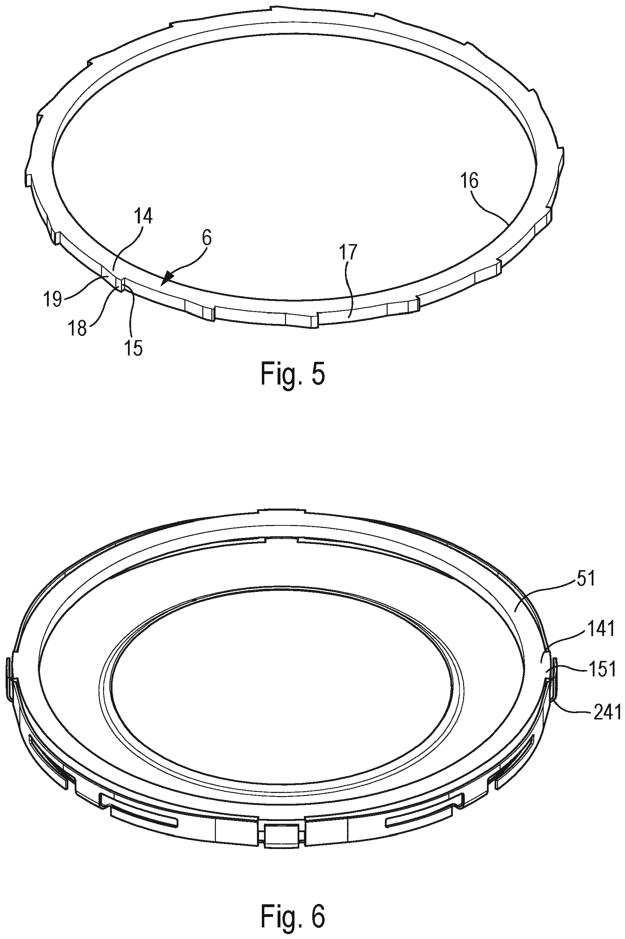

Figure 5, les ressorts à lame 13 sont chacun destinés à venir se positionner au repos en appui contre une butée 14 formée par la deuxième rondelle de frottement 6. La deuxième rondelle de frottement 6 forme un anneau de dimension radiale variable. La deuxième rondelle de frottement 6 forme un contour intérieur 16 de dimension constants et un contour extérieur 17 de dimension variable. En particulier, le contour extérieur présente des formes s'étendant radialement vers l'extérieur pour former des butées telles que 14. Dans l'exemple figure 3 qui est une vue partielle, on peut voir sept butées telles que 14. Sur une telle deuxième rondelle de frottement 6, il peut y avoir seize butées telles que 14 comme illustrées en figure 5.

La butée 14 forme une proéminence radialement externe délimitant une surface radiale 15 contre laquelle est destinée à venir en appui au repos une extrémité libre 24 de la languette 23 du ressort à lame 13. La butée 14 comporte également une surface 18 qui prolonge la surface radiale 15 et qui s'étend circonférentiellement. La surface 18 est prolongée par une surface 19 qui est inclinée, puis par une surface se confondant avec une surface formée par le reste du contour extérieur 17.

Par repos on entend position du ressort à lame lorsque le moteur du véhicule n'est pas encore en marche.

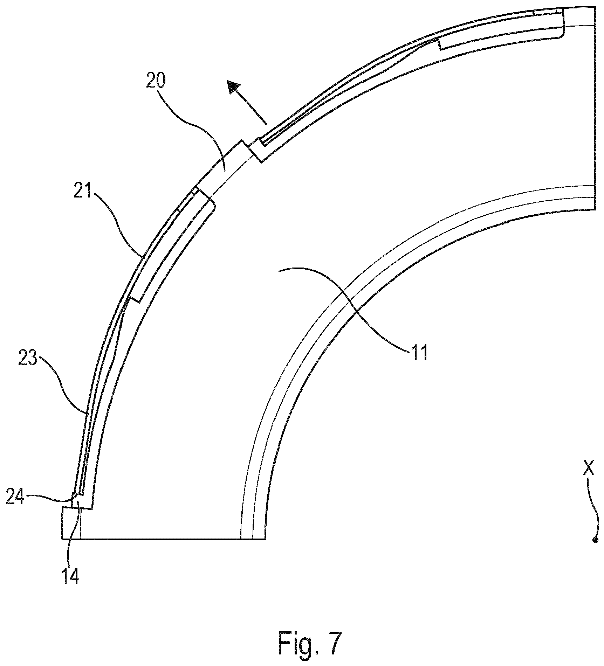

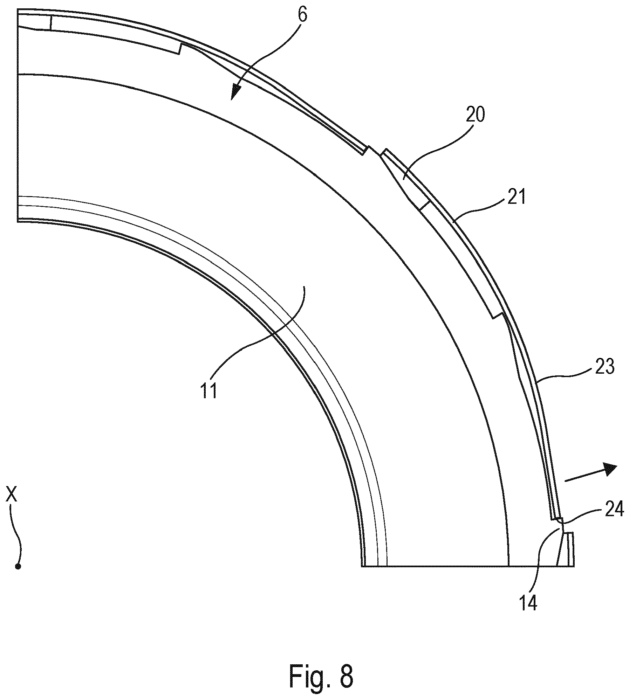

Figures 7 et 8, la languette 23 est au repos positionnée sur deux cercles concentriques. L'extrémité libre 24 de la languette 23, qui est éloignée de la zone de raideur 21, est située sur le cercle de plus petit diamètre par rapport à une autre extrémité de la languette 23 proche de cette même zone de raideur 21 qui est située sur un cercle de diamètre plus grand.

Figure 4 est illustré un positionnement des ressorts à lames tels que 13 les uns à la suite des autres circonférentiellement. Dans l'exemple figure 6, est illustré une autre variante de l'invention dans laquelle sont illustrés d'autres ressorts à lame tels que 131 qui sont positionnés deux à deux avec leur languette respective telle que 131 positionnée en regard l'une de l'autre. On peut voir sur cette figure 6 que des butées telles que 141 sont formées à partir d'un contour extérieur 171 d'une deuxième rondelle de frottement 51 avec deux surfaces radiales telles que 151 aptes à recevoir en correspondance en appui une extrémité libre 241 d'une languette 231 du ressort à lame 131.

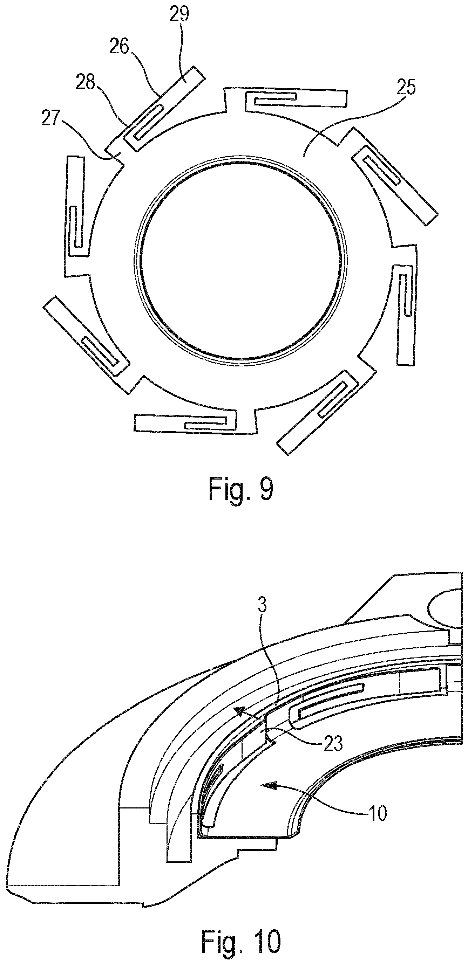

Figure 9, l'organe de verrouillage 10 est réalisé à partir d'une tôle qui est découpée suivant un anneau 25 à la périphérie duquel des bras 26 sont découpés et formés. Ces bras forment une première partie 27 s'étendant radialement, puis une deuxième et une troisième parties respectivement 28 et 29. La deuxième et troisième parties 28 et 29 s'étendent obliquement par rapport à la première partie 27. La deuxième partie 28 présente une épaisseur amincie par rapport à une épaisseur de la première et troisième parties 27 et 29. Cette deuxième partie 28 formera la zone de raideur de valeur déterminée en fonction de la force centrifuge nécessaire pour écarter l'extrémité libre 24 de la languette 23 par rapport à la butée 14.

La première partie 27 est ensuite pliée de telle manière à ce que la deuxième et la troisième parties 28 et 29 s'étendent dans un plan sensiblement perpendiculaire par rapport à un plan dans lequel s'étend l'anneau 25. La troisième partie 29 est ensuite courbée de manière à ce que son extrémité libre soit située dans un cercle de plus petit diamètre que celui dans lequel s'étend la deuxième partie 28.

Au moment où le moteur est mis en marche, le volant primaire 2 et le volant secondaire 3 sont mis en mouvement. Sous l'action de l'accumulateur d'énergie, le volant primaire 2 et le volant secondaire 3 sont mis en rotation l'un à l'encontre de l'autre. A chaque mouvement de rotation, la languette 23 est déplacée circonférentiellement de manière à ce que son extrémité libre 24 s'éloigne de la butée 14 puis revienne en appui contre cette même butée 14. A chaque fois que l'extrémité libre 24 est éloignée de la butée 14, la deuxième rondelle de frottement 6 est liée en rotation au volant primaire 2 sans générer de frottement. Dès que l'extrémité libre 24 revient en appui contre la butée 14, la deuxième rondelle de frottement 6 reste liée en rotation au volant secondaire 3 et frotte contre le volant primaire 2 lors du débattement qui en découle. Ces allés et venues de l'extrémité libre 24 se produisent tant que la vitesse de rotation du moteur est en dessous de 400 tours par minutes.

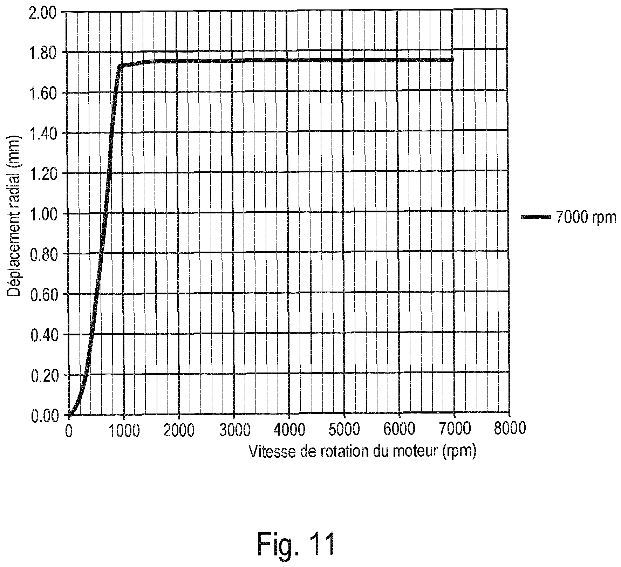

En dessous de 400 tours par minute, l'extrémité libre 24 de la languette 23 est placé en dessous d'un cercle passant par un sommet de la butée 14 comme illustré en figures 7 ou 8. En figure 11, on observe également qu'en dessous de 400 tours par minutes, il se produit un léger déplacement radial (entre 0,00 et 0,400).

Entre 400 et 600 tours par minute, l'extrémité libre 24 est apte à se soulever de la deuxième rondelle de frottement 6 radialement vers l'extérieur tout en s'éloignant de l'axe X de telle manière à ne plus être en appui contre la butée 14 lors des débattements du volant primaire 2 et du volant secondaire 3 l'un par rapport à l'autre, figures 7 et 8. L'oignement de l'extrémité libre 24 est illustrée par une flèche figures 7 et 8. Figure 11 on observe un déplacement radial qui se poursuit entre 0,40 et 0,80. A partir de ce moment-là, le volant primaire 2 et le volant secondaire 3 sont aptes à tourner l'un par rapport à l'autre sans qu'un frottement soit généré par la deuxième rondelle de frottement 6. Ainsi, on pourra noter que la butée 14 est configurée de telle manière à ce que l'extrémité de la languette 13 puisse ne plus être au contact de la butée 14 au-delà de 600 tours par minute.

La languette 23 peut même être configurée de telle manière à être amenée au contact du volant primaire 2 après 600 tours par minute. En effet, et comme illustré en figure 11, à partir de 1000 tours par minute, on constate que la languette 23 ne se déplace plus car celle-ci est plaquée contre le volant secondaire 3.

Une fois que la vitesse de rotation diminue, la languette 23 est apte à revenir dans une position de repos, c'est-à-dire en appui contre la butée 14.

## Revendications

1. Dispositif amortisseur (1) pour l'absorption ou la compensation d'à-coups de rotation, ledit dispositif comprenant
une masse d'inertie primaire (2),
une masse d'inertie secondaire (3), et
un accumulateur d'énergie disposé entre la masse d'inertie primaire et la masse d'inertie secondaire, la masse d'inertie primaire et la masse d'inertie secondaire étant aptes à réaliser une rotation relative contre l'action de l'accumulateur d'énergie,
au moins un premier élément de frottement (5) solidaire en rotation de la masse d'inertie primaire et au moins un second élément de frottement (6) tournant par rapport au premier élément de frottement et en appui contre la masse d'inertie primaire, et
un organe de verrouillage (10) solidaire en rotation de la masse d'inertie secondaire, mobile sous l'action d'une force centrifuge et solidaire du second élément de frottement quand une vitesse de rotation du moteur est en-dessous d'une valeur pré-déterminée, l'organe de verrouillage forme au moins un ressort à lame (13), le ressort à lame étant configuré de telle manière à ce qu'une extrémité libre (24) du ressort à lame soit positionnée au repos en appui circonférentiellement contre une butée (14) formée par le second élément de frottement et est apte à être écartée de la butée sous l'action de la force centrifuge libérant le second élément de frottement.

2. Dispositif selon la revendication 1, dans lequel le second élément de frottement forme un anneau présentant une dimension radiale variable lorsque l'on se déplace circonférentiellement, l'anneau s'étendant entre un contour intérieur (16) sensiblement circulaire et un contour extérieur (17) de position radiale variable, une partie de ce contour extérieur formant la butée.

3. Dispositif selon la revendication 2, dans lequel l'extrémité libre présente une forme sensiblement plane apte à venir épouser une forme similaire en correspondance formée par le contour extérieur de l'anneau.

4. Dispositif selon l'une des revendications 1 à 3, dans lequel la butée forme une première surface (15) s'étendant radialement à partir d'un cercle d'un premier rayon jusqu'à un sommet d'un deuxième rayon plus grand, la première surface se prolongeant en son sommet par une deuxième surface (18) s'étendant circonférentiellement, la deuxième surface se prolongeant par une troisième surface (19) s'étendant selon une pente jusqu'au cercle de premier rayon, l'extrémité libre du ressort à lame venant se positionner au regard de la troisième surface.

5. Dispositif selon l'une des revendications 1 à 4, dans lequel le deuxième élément de frottement présente une pluralité de butées.

6. Dispositif selon la revendication 5, dans lequel l'organe de verrouillage comporte une pluralité de ressorts à lame, le nombre de ressorts à lame étant égal à la moitié du nombre de butées.

7. Dispositif selon l'une des revendications 5 à 6, dans lequel l'organe de verrouillage comporte une série d'un premier ressort à lame et d'un deuxième ressort à lame disposé l'un à la suite de l'autre, les extrémités libres de chacun des deux ressorts à lame étant disposées tête bêche ou l'une à la suite de l'autre.

8. Dispositif selon l'une des revendications 1 à 7, dans lequel l'organe de verrouillage forme une première portion (11) annulaire solidaire en rotation de la masse secondaire et une deuxième portion (12) comprenant une partie fixe et une partie mobile, l'extrémité libre du ressort à lame étant formée par la partie mobile tout en s'étendant au repos à l'intérieur d'une surface cylindrique formée par la partie fixe.

9. Dispositif selon la revendication 8, dans lequel la première portion et la deuxième portion s'étendent sensiblement perpendiculairement l'une par rapport à l'autre.

10. Dispositif selon l'une des revendications 1 à 9, dans lequel l'extrémité libre du ressort à lame est apte à être déplacée radialement vers l'extérieur jusqu'à être plaquée contre la masse secondaire.

11. Dispositif selon l'une des revendications 1 à 10, dans lequel l'extrémité libre du ressort à lame est configurée de telle sorte à s'écarter de la butée du second élément de frottement pour une vitesse de rotation comprise entre 400 et 600 tour/min.

12. Procédé de fabrication d'un organe de verrouillage d'un dispositif amortisseur selon l'une des revendications précédentes, **caractérisé en ce qu'**il comporte les étapes suivantes :
découper une tôle,
plier la tôle sur tout son pourtour périphérique de manière à obtenir une première portion (25) et une deuxième portion (26) comprenant le ressort à lame, puis
plier le ressort à lame de telle sorte à ce que son extrémité libre se situe à l'intérieur d'un cylindre délimité par le reste de la deuxième portion.]
